Europäisches Patentamt

European Patent Office

Office européen des brevets

(11) Publication number: **0 426 937 A1**

## EUROPEAN PATENT APPLICATION

(21) Application number: 90109020.9

(51) Int. Cl.⁵: **B01D 53/04**

(22) Date of filing: 14.05.90

(30) Priority: 04.11.89 JP 287726/89

(43) Date of publication of application:
15.05.91 Bulletin 91/20

(84) Designated Contracting States:
AT BE CH DE DK ES FR GB GR IT LI LU NL SE

(71) Applicant: SAIBU GAS CO.,LTD.
17-1, Chiyo 1-chome, Hakata-ku
Fukuoka-shi, Fukuoka-ken(JP)

Applicant: MITSUBISHI PETROCHEMICAL
ENGINEERING CO., LTD.
5-4, Nihonbashi Bakuro-cho 1-chome
Chuo-ku Tokyo(JP)

(72) Inventor: Urano, Shoji, c/o Saibu Gas co., Ltd.
17-1, Chiyo 1-chome, Hakata-ku
Fukuoka-shi, Fukuoka-ken(JP)

Inventor: Kinoshita, Natsuo, c/o Saibu Gas
co., Ltd.
17-1, Chiyo 1-chome, Hakata-ku
Fukuoka-shi, Fukuoka-ken(JP)
Inventor: Ohta, Kei, c/o Saibu Gas co., Ltd.
17-1, Chiyo 1-chome, Hakata-ku
Fukuoka-shi, Fukuoka-ken(JP)
Inventor: Kawasaki, Shunji, c/o Saibu Gas co.,
Ltd.
17-1, Chiyo 1-chome, Hakata-ku
Fukuoka-shi, Fukuoka-ken(JP)
Inventor: Nishino, Chikashi
22-64 Kotobuki 2-chome
Abiko-shi, Chiba-ken(JP)

(74) Representative: Füchsle, Klaus, Dipl.-Ing. et al
Hoffmann . Eitle & Partner Patentanwälte
Arabellastrasse 4
W-8000 München 81(DE)

(54) Gas recovery system with excessively re-adsorbable process in pressure swing adsortion device.

(57) This invention relates to the improvement of the so-called Pressure Swing Adsorption system, which comprising four units of the adsorption column with a carbon type adsorbent therein to be used cyclically in sequence a serial processes of adsorption, re-adsorption, desorption and pressurization, more particularly this invention is purposed to improve the recovery efficiency of a primary component gas containing combustible components such as $CH_4$ and $H_2$ by means of an innovative system which is characterized in that:

[1] the desorption process is divided into three stages such as primary, secondary and tertiary desorption stage, then a gas mixture with $CH_4$ and $CO_2$ desorbed in the secondary stage, which is exhausted to the outside in the conventional PSA device, is recovered into a reservior, and $CO_2$-rich gas desorbed in the tertiary stage is obtained from the PSA device produced as the product $CO_2$ gas; and

[2] In the re-adsorption process, recovered gas is fed into the re-adsorption column to adsorb the $CO_2$ excessively by using a higher partial pressure of preheated $CO_2$ gas.

# GAS RECOVERY SYSTEM WITH EXCESSIVELY RE-ADSORBABLE PROCESS IN PRESSURE SWING ADSORPTION DEVICE

## BACKGROUND OF THE INVENTION

### 1. Field of the Invention

This invention relates to a re-adsorption device for adsorbing $CO_2$ gas excessively and selectively, more particularly for obtaining a combustible gas mixture consisting of $CO_2$-rich gas and $CH_4$ gas in a re-adsorption process in the so-called Pressure Swing Adsorption device (PSA device) in the art.

### 2. Description of the Prior Art

Conventionally, in the pressure swing adsorption device (it is referred to as "PSA device" hereunder), a crude gas mixture consisting of $CH_4$, $CO_2$, $H_2$, moisture, heavy-hydrocarbon and the like is fed into an adsorption column wherein $CO_2$ gas is selectively adsorbed as first in an adsorption process (the $CO_2$ is referred to as "a secondary component" and a secondary component gas is further referred to as "a desorbed gas" in a desorption process hereunder) so that the major remainder such as $CH_4$ is delivered from the column upon completion of the adsorption process (the $CH_4$ is referred to as "a primary component" and a primary component gas is further referred to as "a product gas" after the adsorption process hereunder), thereafter when the secondary component($CO_2$) contained within the adsorbent is taken out by a desorption process under depressurization, it is known that a desorbed gas is produced inevitably in which still contains the primary component($CH_4$) more or less, as well as a purged gas in the PSA device, wherein these desorbed and purged gases are exhausted to the outside in the conventional PSA device as the rest gas. From this fact, it is disadvantageous that the loss of the primary component($CH_4$) is larger and the recovery efficiency of the primary component($CH_4$) becomes lower comparing with the case in which all the produced primary component($CH_4$) would be used as a product gas. On the other hand, it is also disadvantageous that the recovery efficiency of the secondary component($CO_2$) becomes lower if all the produced secondary component($CO_2$) would be taken out as a product gas because, as described in the above, these desorbed gas and purged gas still contain a lot of the primary component($CH_4$). Thus, in the conventional PSA device, it is difficult to increase the recovery efficiency of the primary component($CH_4$) while keeping the purity of the primary component($CH_4$) not to be lower, and also difficult to increase the purity of the secondary component($CO_2$) while keeping the recovery efficiency of the secondary component($CO_2$) not to be lower.

As a choice, however, when the primary component($CH_4$) is requested as the product gas as much as possible, it is known that there is a way to recover a partial amount of the desorbed gas and then to recycle the recovered gas(one of the desorbed gas) into the crude gas mixture as it is, however, this way is still disadvantageous in that the amount of recycled gas becomes extremely larger consequently so that the size of the PSA device becomes larger, accompanying with an expensive running cost in the operation.

## SUMMARY OF THE INVENTION

In view of the above disadvantages of the conventional PSA device, the present invention is purposed to provide an improved PSA device capable of obtaining an effectively usable gas mixture consisting of $CH_4$-rich gas(than the recovered gas) and $CO_2$ gas (it is referred to as "a tertiary component gas" hereunder) which is further processed specially to recover an additional $CH_4$ from the recovered gas, and further capable of increasing the purity and recovery efficiency of the primary component($CH_4$) as well as the the purity and recovery efficiency of the secondary component($CO_2$), whereby capable of minimizing the size of the whole PSA device with the lowest running cost in the operation.

In the definition of the so-called PSA device in the art, this device can be defined as a produced gas refining device, that is, this device is subjected to a gas producing device in the upstream, and also a calorie regulating device in the down stream, so as to put the PSA device between them, which is purposed to carburet a finally primary component gas from the PSA device to a desirable calorie by adding another fuel gas such as butane and the like except for the desorbed gas. However, it is known that the conventional desorbed gas still contains an usable component. The conventional desorbed gas is positioned in the present invention as "recovered gas" in the early stage of desorption process, therefore, the above "a tertiary component gas"($CH_4$-rich gas than the recovered gas, and the $CO_2$ gas) is a gas which is further recovered from the conventional desorbed gas by using the present invention, that is, it is designated as the recovered gas in the present invention.

## OBJECTS AND ADVANTAGES OF THE INVENTION

It is a general object of the present invention to provide an improved PSA device, comprising four units of adsorption column packed an adsorbent therein respectively in which are operated cyclically in sequence of the serial processes of adsorption, re-adsorption, desorption and pressurization, wherein a crude gas mixture consisting of $CH_4$, $CO_2$, $H_2$, moisture and heavy hydrocarbon is fed into an adsorption column to adsorb $CO_2$ gas mainly, wherein a refined gas which mainly containing a primary content($CH_4$) are produced in the column, and in a desorption column, a desorbed gas which mainly containing a secondary content($CO_2$) is taken out from the adsorbent under depressurization; In the definition of desorption process, this process is specified to divide into three stages such as a primary desorption stage, secondary stage and tertiary stage. In the primary desorption stage, a pressure uniformalization is done by feeding the gas by controlling the flow rate of gas according to the condition of re-adsorption in the desorption column into the column prepared to the adsorption process, in the secondary desorption stage a gas mixture consisting of $CH_4$ and $CO_2$ is desorbed in a self-depressurization and a depressurization by suction wherein the desorbed gas mixture is recovered and fed into a reservoir such as a water-sealed gas holder and used as "a recovered gas". In the tertiary desorption stage, a $CO_2$-rich gas is desorbed as a secondary component-($CO_2$) gas in a desorption by suction; An adsorbent specified to have a high selectivity of adsorbing the secondary component($CO_2$) is packed into each column commonly, wherein the following processes are operated specifically:

[1] In the adsorption column, initially a crude gas mixture is fed into the bottom portion of the adsorption column wherein the secondary component($CO_2$) contained within the crude gas mixture is selectively adsorbed as much as possible until just before the breakthrough point, wherein the refined gases containing $CH_4$-rich gas with $CO_2$-less gas is fed to a refined gas surge tank and then the adsorption column is prepared to switch the cycled re-adsorption process;

[2] In the re-adsorption column, the recovered gas from holder containing $CO_2$-rich gas and $CH_4$ gas is fed into the re-adsorption column now switched from the adsorption process, the recovered gas from holder is prepared in advance to rise up the temperature, which is higher than that of the crude gas mixture, and to regulate the pressure, the flow rate of gas and the gas components which contains more $CO_2$ gas than the crude gas mixture does, in order to meet with the favorable conditions of the re-adsorption process, and then the recovered gas from holder is fed into the bottom portion of the column which is ready for the re-adsorption process, in which the secondary component($CO_2$) within the recovered gas from holder is further adsorbed excessively because of the increasing the partial pressure of $CO_2$ gas and lower than the maximum operating temperature of the adsorbent, while the recovered gas from holder is passed up through the packed adsorbent from the bottom portion of the column, consequently a gas mixture containing mainly $CH_4$ gas is obtained as a tertiary component($CH_4$-rich gas than the recovered gas and the $CO_2$ gas) out of the upper portion of the re-adsorption column, and the re-adsorption column is prepared to switch the desorption process;

[3] In the desorption process, the pressure in the above column is depressurized to make the adsorbent which excessively adsorbed $CO_2$ in the re-adsorption process to desorb and obtain the recovered gas into holder and the secondary component gas in the secondary desorption stage of the self-depressurization, the depressurization by suction and then to cause the adsorbent to further desorb $CO_2$-rich gas in the tertiary desorption stage in the desorption by suction, wherein the column is further prepared to switch to the initial adsorption process; and

[4] In the preparation of the adsorption process, the column is pressurized in advance by receiving a higher pressure gas from the column which starts the desorption process, and then further pressurized by the refined gas from the surge tank, wherein the column is kept intact for a while;

Characterized in that the above re-adsorption process in the paragraph [2] is specified to be operated under the following conditions, whereby the tertiary component gas($CH_4$-rich gas than the recovered gas from holder and the $CO_2$ gas) are obtained:

[a] the temperature of the recovered gas from holder to be fed into the re-adsorption column is specified higher than the gas temperature of the crude gas mixture to be fed into the adsorption column, and lower than the maximum operating temperature of the adsorbent; and

[b] the concentration of the secondary component($CO_2$) of the recovered gas from holder is specified higher than the $CO_2$ concentration of the crude gas mixture, and lower than the $CO_2$ concentration of the secondary component gas(desorbed gas in the tertiary desorption stage) wherein the operation of the re-adsorption process is done by feeding the recovered gas into the re-adsorption column uniformly according to the conditions of the paragraph[a] and [b].

This specification of $CO_2$ concentration changes the partial pressure of $CO_2$ gas higher in the re-adsorption and increases the quantity of adsorption of $CO_2$ gas.

## BRIEF DESCRIPTION OF THE DRAWINGS

Table 1 is a diagram for showing a serial processes(cycles) including serial steps of the operation in an improved PSA device of the present invention.

Table 2 is a table for showing the analyzed values of each gas composition and the operational flow rate of each gas.

Table 3 is a table for showing a moisture content of the crude gas mixture and the refined gas.

Fig.1-A to Fig.1-E are a schematic flow sheet for showing the operations in sequence according to a predetermined serial processes in an improved PSA device of the present invention.

Fig.2 is a schematic illustration of an adsorption column for showing each position of measuring the temperatures of adsorbent bed packed in the column.

Fig.3 is a graph for showing the temperature profile in the adsorbent bed during the operations of each process.

Fig.4 is a graph for showing the concentrations of a refined gas from the outlet of the upper portion of the column during the operation of the adsorption process.

Fig.5 is a graph for showing an equilibrium adsorption curves in a constant temperature.

Fig.6 is a graph for showing the concentrations of a recovered gas from holder to be fed into the bottom portion of a re-adsorption column.

Fig.7 is a graph for showing a gas to be taken out of the upper portion of the re-adsorption column.

Fig.8 is a graph for showing a temperature dependency of desorbable speed of $CH_4$ gas.

Fig.9 is a graph for showing the superiority of the present invention in comparison with the conventional desorption process.

## DESCRIPTION OF THE PREFERRED EMBODIMENT

Referring now in detail to the present invention in accordance with the Tables and drawings as follows:

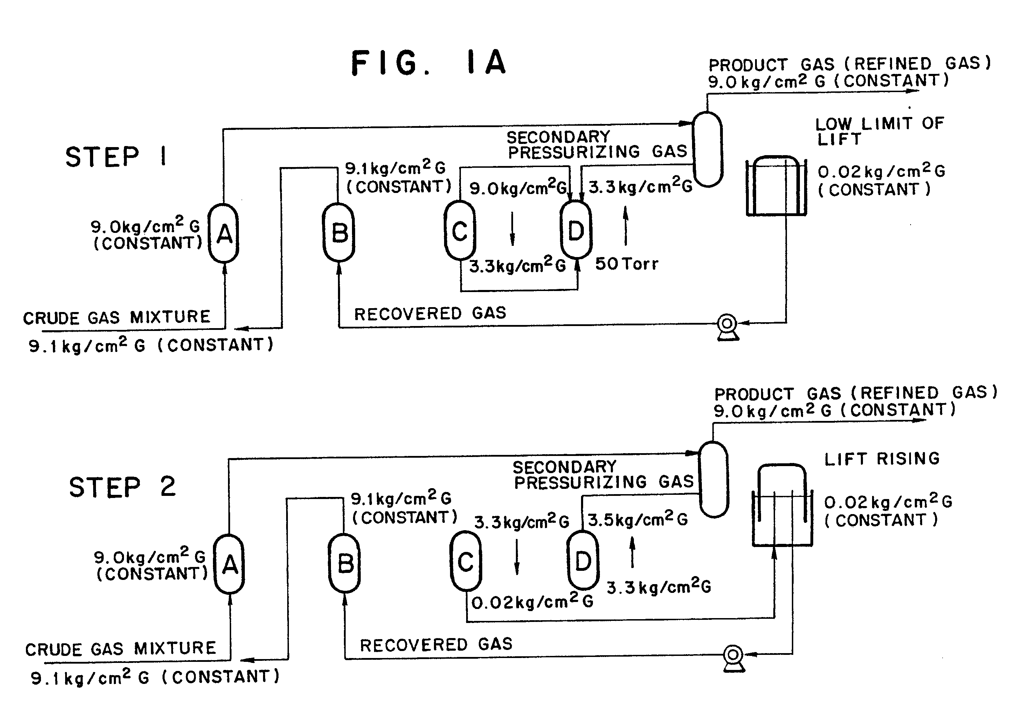

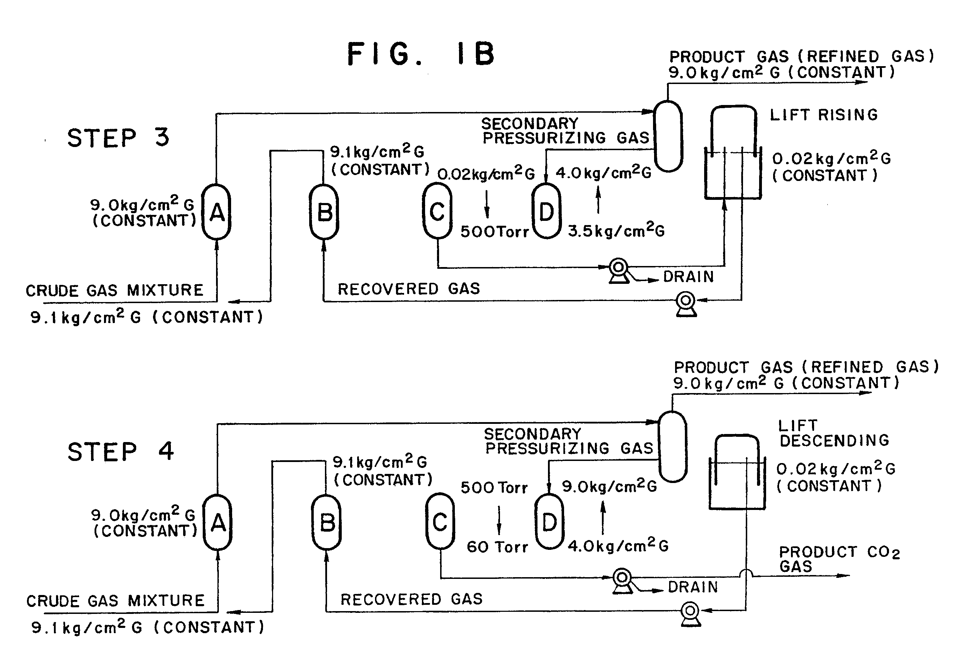

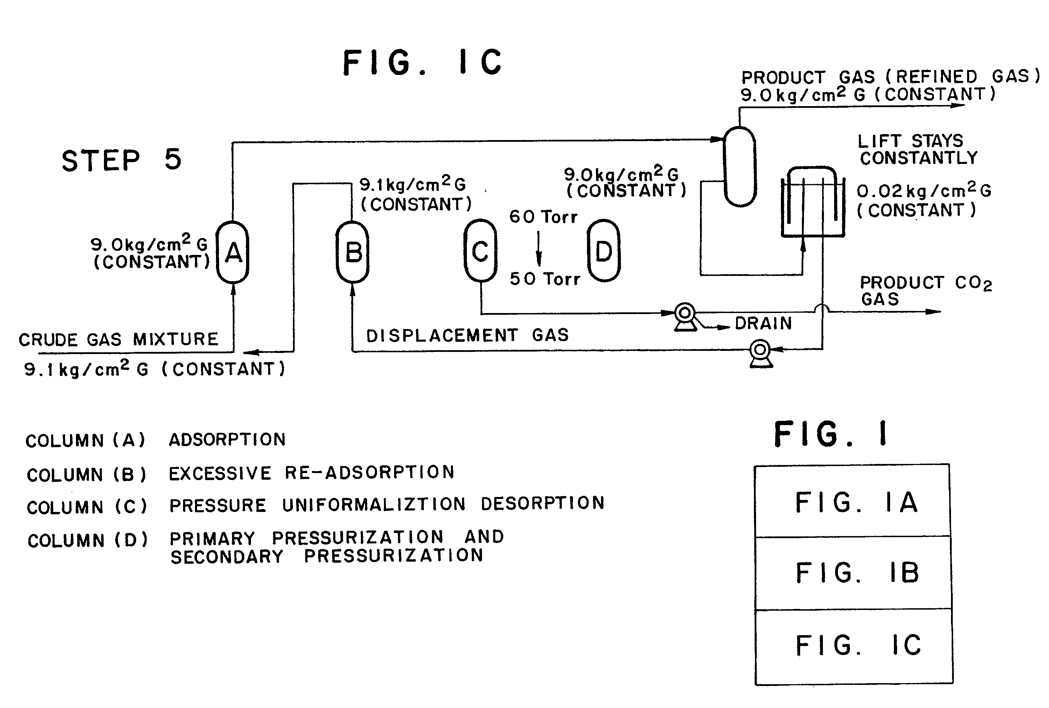

In Fig.1, as referred to previously, an improved PSA device of the present invention consists of four units of adsorption column mainly with subsidiary equipments, wherein these columns are operated cyclically in sequence of the serial processes of adsorption, re-adsorption, desorption and pressurization.

In an aspect of the above cycles, when column(A) is in the adsorption process, column(B) is in the re-adsorption process, column(C) is in the desorption process with pressure uniformalization step and column-(D) is in the pressurization process with primary and secondary pressurizing steps, thus the rotation consists of four cycles by repeating each oycle from the column(A) to the column(D), to the column(C) and to the column(B) in sequence. This improved PSA device further provides, other than four units of the column, the adsorbent in each column respectively, a vacuum pump, a water-sealed gas holder to reserve a recovered gas therein and also to be in charge of regulating the pressure of the recovered gas, and uniformalizing the gas content recovered in the secondary desorption stage of desorption process, a recovered gas compressor to feed the recovered gas from holder into a column which is ready for the re-adsorption process, a heating device for heating up the recovered gas, and a refined gas surge tank.

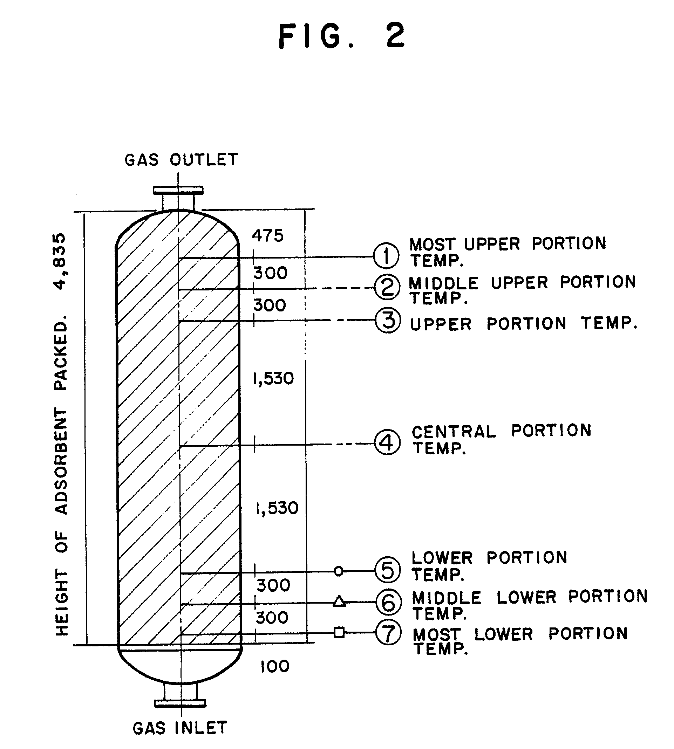

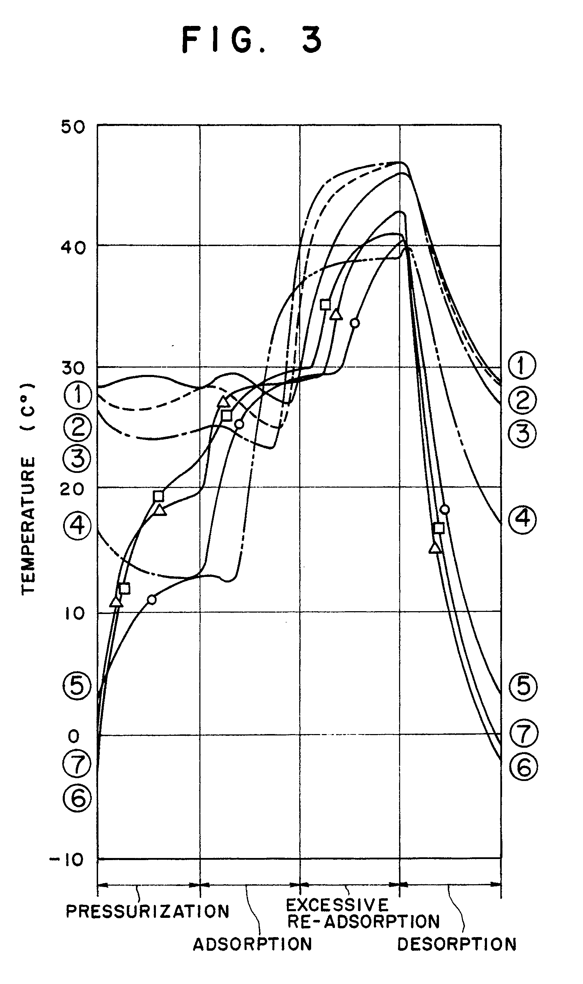

In Table 1, the above four cycles with each steps consisting of 20 steps are shown, and in Fig.3, temperature profiles at several points in the adsorbent bed are shown, which are measured by inserting 7 pieces of resistance thermometer bulb into the adsorbent bed shown in Fig.2, three pieces of thermometer bulb are inserted in the upper portion of the adsorbent bed, one piece is in the central portion and the other three are in the lower portion as shown in Fig.2. The temperature profiles of each portion are shown in Fig.3.

It is referred in detail to the each process of the improved PSA device of the present invention according to the Table and drawings as follows:

[1] Pressurization process

Supposing that now there is a column here which has finished the desorption process, therefore, the internal pressure of this column is near to a vacuum. In the preparation of pressurizing this column aiming to back to the adsorption process, this column can receive a highly pressurized gases from the column which has finished the re-adsorption process and then going to the desorption process. This feature is illustrated in Fig.1-A which shows that column(C) feeds 9 kg/cm²G gases into column(D) through both feeding lines of upper and lower portions, and then it shows that the column(C) is depressurized from 9 kg/cm²G to 3.3 kg/cm²G, in contrast the column(D) is pressurized from (-)0.97 kg/cm²G(50 Torr) to 3.3 kg/cm²G, that is, these two columns have been balanced at the same pressure. This operation is designated as "a primary pressurization or pressure uniformalization" in the description of the present invention. However, the column(D) is further required to be pressurized until at 9 kg/cm²G which is a same adsorption pressure as the pressure of a new crude gas mixture, therefore, an additional gas is fed from a refined gas surge tank into the column(D) through an upper feeding line as illustrated in the serial illustrations of Figs.1-A, B, C, D and E. This additional operation is designated as "a secondary pressurization" in this description.

Regarding the gas compositions of the column(D) in which are fed during the primary and secondary pressurizations, a gas mixture consisting of $CH_4$, $CO_2$ and other are fed into the column(D) during the primary pressurization from the column(C) which has finished the re-adsorption process and then going to the desorption process, however, in the primary pressurization, it is noted that the gas content of $CH_4$ component in the upper portion of the column(D) is comparatively higher than the gas of the lower portion of the column(D) because of the concentration profile of $CH_4$ gas and $CO_2$ gas in the re-adsorption column-(C), that is, a $CH_4$-rich gas is filled in the upper portion of the column(C) and $CO_2$-rich gas is filled in the lower portion. From this feature of the gas concentration profile in the column(D), it can say that the primary pressurization is an effective operation to recover an additional gas pressure and the gas component gradient from the re-adsorption column(C) into the column(D) switched the next adsorption process. Thereafter, the secondary pressurization is achieved by feeding an additional refined gas from the refined gas surge tank into the column(C). According to these two stage pressurizations, the column(C) is filled with the $CH_4$-rich gas and the additional refined gas.

In the analysis of the above operations, according to the temperature profile in the adsorbent bed, as shown in Fig.3 graphically, it can observe that each temperature of the position ② and ③ are slightly descended. One of the reasons of this temperature descent can be concluded that a certain amount of $CO_2$ gas is desorbed from the adsorbent bed in the upper portion according to the cleaning effect by feeding the pressurizing gas, however, in the lower portion of the adsorbent bed the $CO_2$ gas is adsorbed contrarily according to the regeneration degree of the adsorbent, consequently the temperatures of positions ⑤, ⑥ and ⑦ are risen by the heat of adsorption.


[2] Adsorption process

In the adsorption process, a crude gas mixture is fed into the bottom portion of an adsorption column, and the $CO_2$ and moisture contained within the crude gas mixture are selectively adsorbed as much as possible in the adsorbent bed until just before the breakthrough point while the crude gas mixture is passing through the adsorbent bed. A time of adsorption process is set up to finish the adsorption process when the front of adsorbing zone passes up toward the upper portion of the adsorbent bed from the bottom portion, and reaches at the top portion.

In this operation, as shown in Fig.3, the temperature profiles shows that the temperatures positioned at ⑦, ⑥ and ⑤ in the adsorbent bed are risen by the exothermic heat of the adsorption and it is noted that the temperature profiles show the corresponding movement of the front of the adsorption zone.

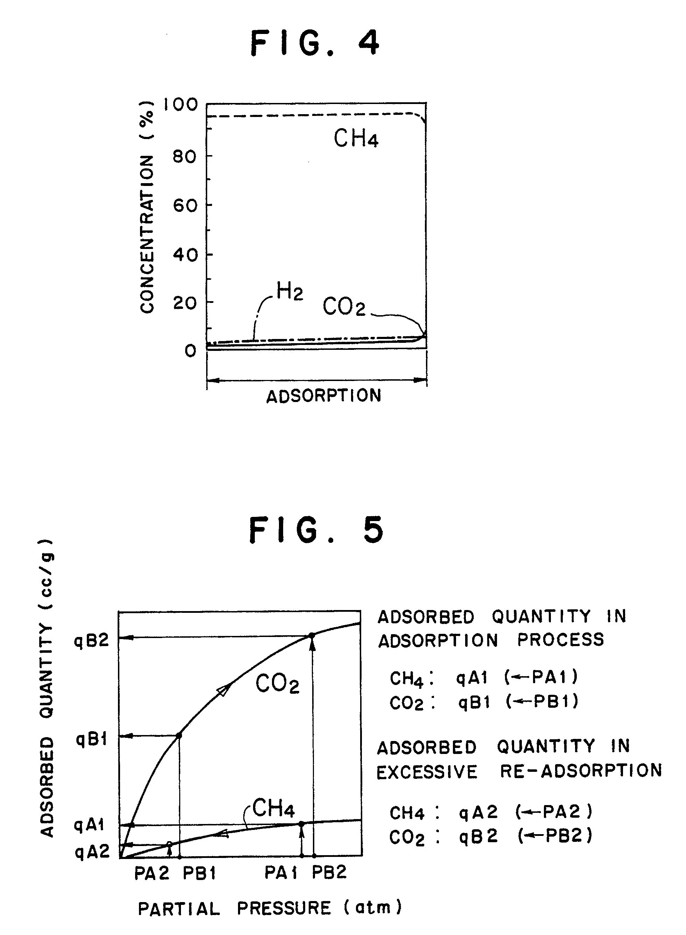

On the other hand, the temperature of the upper portions of ③, ② and ① show that they rise slightly at the beginning of the adsorption process but soon descent in the latter half of the adsorption process, and they rise suddenly when the front of the adsorption zone passes over the breakthrough point of the adsorbent. The $CH_4$, $CO_2$ and $H_2$ concentrations at the outlet of the upper portion of the adsorption column are shown in Fig.4.

From these graphs, it can be observed that the breakthrough point has reached at the top of the adsorption column in the last stage of the adsorption process.


[3] Re-adsorption process

Before the explanation of the present invention in detail, it is necessary to revert to the gas recovered in a reservoir in the secondary desorption stage in the self-depressurization and the depressurization by suction of the desorption process. The recovered gas into holder contains $CO_2$-rich gas, a certain amount of $CH_4$ gas exhausted to the outside conventionally.

Therefore, it is the object of the present invention to recover the $CH_4$ component from such the conventional exhaust gas by means of the re-adsorption process of the present invention. In this view, this re-adsorption process is the most important process in the present invention.

The recovered gas from holder is fed into the bottom of the re-adsorption column and and passes through upwardly and the $CO_2$ gas contained within the recovered gas from holder, and is excessively re-adsorbed because of changes the partial pressure of $CO_2$ gas in the re-adsorption column in comparing with the feed of the crude gas mixture. This operation means that it is to make the adsorbent, which once adsobed a certain amount of $CO_2$ gas in the adsorption process, to further re-adsorb an additional $CO_2$ gas.

In the comparison of $CO_2$ gas concentrations between the crude gas mixture and the recovered gas from holder, as shown in Table 2, the crude gas mixture has 25.15% of $CO_2$ gas but the recovered gas from holder has 75.77% of $CO_2$ gas, therefore, the $CO_2$ gas concentration in the recovered gas is three times higher than that in the crude gas mixture, this fact means that the partial pressure of $CO_2$ gas in the recovered gas from holder is much higher than that in the crude gas mixture, therefore, the adsorbent adsorbs excessively the $CO_2$ gas in the recovered gas from holder.

Fig.5 shows the relationships between the adsorbable quantities (cc/g) of $CH_4$ and $CO_2$ and the partial pressure of $CH_4$ and $CO_2$ in the adsorption process and the re-adsorption process. Observing the graph of $CO_2$, in the adsorption process, when the partial pressure of $CO_2$ in the crude gas mixture is positioned at $PB_1$, the adsorbable quantity is shown at $qB_1$(cc/g) and in the re-adsorption process, when the partial pressure of $CO_2$ of the recovered gas is positioned at $PB_2$, the adsorbable quantity is shown at $qB_2$, therefore, it is understandable how the higher partial pressure increases the adsorbable quantity.

In addition, the recovered gas from holder is regulated at 90 °C following the reasons:

It is scheduled that this co-adsorbed $CH_4$ gas is desorbed the re-adsorption process and the $CO_2$ gas is desorbed in the latter stage of the desorption process. It is an important requirement to put the difference in the time of desorption between these gases. It is required to increase the temperature of the adsorbent prior to the desorption process so as to the desorption of the $CH_4$ gas selectively and $CO_2$ gas earlier than that of without preheating, therefore, the temperature of the recycled gas is rising up at 90 C°.

The temperature profiles in the adsorbent bed during the re-adsorption process show two adsorbing zones such as the adsorption zone and the excessively re-adsorption zone in the adsorbent bed. It is because, the adsorbent packed in the upper adsorbent bed still remains the ability of adsorbing $CO_2$ gas and the selectively and excessively re-adsorption of $CO_2$ gas at the lower portion of the adsorbent bed starts.

From the rising of the temperature in the adsorbent bed, it is observed that the re-adsorption zone upwardly in the adsorption bed according to the progress of the re-adsorption, and the lower portion's adsorbent bed reaches the saturation point of excessively re-adsorbing the $CO_2$ component.

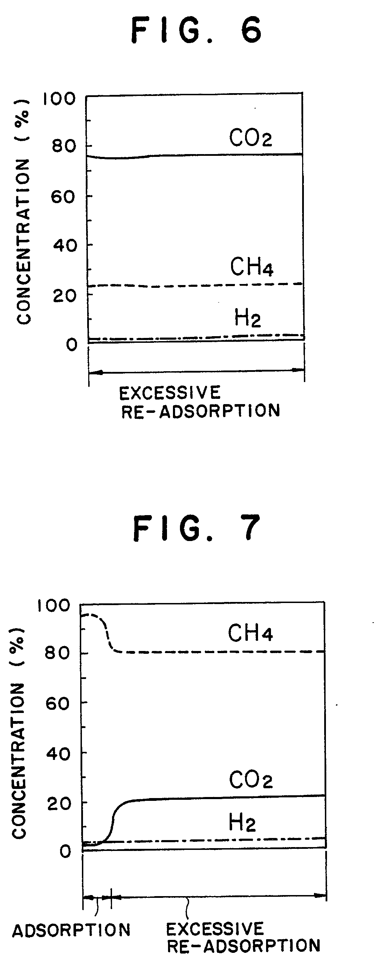

Regarding the gas composition of the recovered gas into holder, it is noted that the gas composition of the recovered gas into holder is uniformalized preliminarily in a water-sealed gas holder by using an uniformalizing device equipped therein, and then the recovered gas from holder is fed into the re-adsorption column through a constant flow rate control valve, therefore, no fluctuation of these gas compositions is seen as shown in Fig.6.

Fig.7 shows the change of gas concentrations(%) at the gas outlet of the re-adsorption column in the latter stage of the adsorption process and the excessive re-adsorption process. In Fig.7, the $CO_2$ concentration increases and $CH_4$ concentration decreases in the re-adsorption process.

In Fig.3, these temperature at ①, ② and ③ in the adsorbent bed during the re-adsorption process show to rise because of the adsorption of $CO_2$ gas the adsorbent, and show that the front of the adsorption zone moves upwardly in order of the positions ③, ② and ①, and then the rising of temperature terminates upon the passing of the adsorbing zone.

It can see that in the lower portion of the re-adsorption column, the temperatures rise in order of the positions ⑦, ⑥ and ⑤ according to the excessively re-adsorption of the $CO_2$ gas and the front of the re-adsorption zone passes through the middle portion of the adsorbent bed in the last stage of the re-adsorption process.

In Fig.7, the $CO_2$ component at the outlet of the re-adsorption column increases in the first stage of this re-adsorption process, after that the $CO_2$ component is kept constant. This indicates the adsorption capacity in the upper portion and also the re-adsorption capacity in the lower portion. It can see that the upper portion's adsorbent bed loses the adsorbability in the first stage of the re-adsorption process but still remains the re-adsorbability even in the last stage of the re-adsorption process.

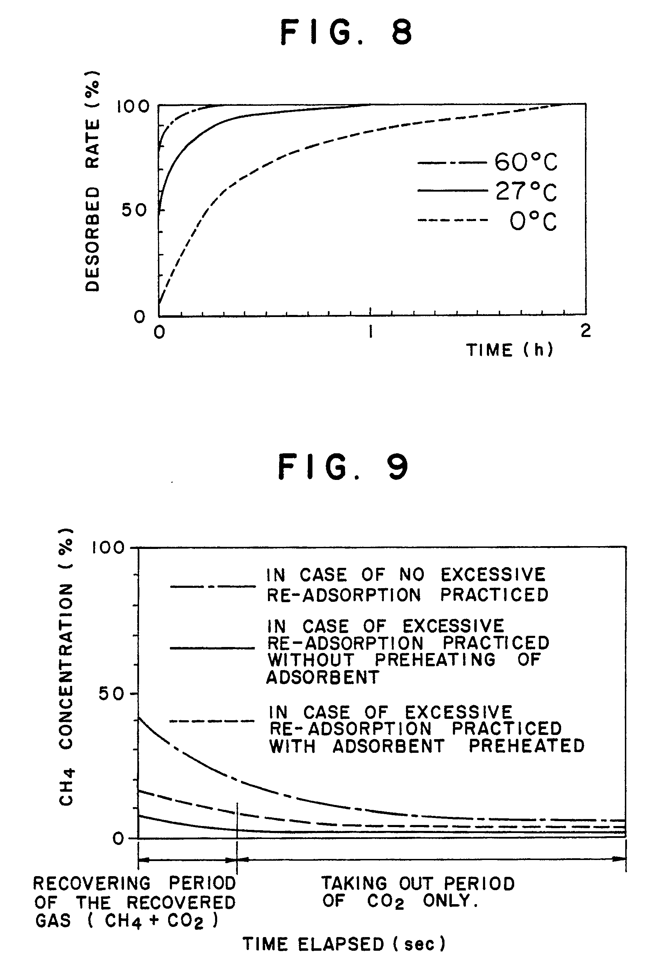

Regarding the temperature of the adsorbent, as it is referred to already the necessity of preheating the adsorbent previously, Fig.8 shows the relationship between the adsorbability of the adsorbent and its temperature, wherein the adsorbability of $CH_4$ not only reduced but also desorbed in the higher temperature, which is the so-called Thermal Swing Adsorption effect(TSA effect) in the art, thereby the desorbed $CH_4$ gas is delivered from the re-adsorption column, thus the $CH_4$ content adsorbed within the adsorbent is reduced so that the $CO_2$ component will be increased.

[4] Desorption process

Upon the completion of the re-adsorption process, the column is depressurized in order such as the primary depressurization stage, the secondary depressurization stage and the tertiary depressurization stage from 9 kg/cm²G to (-)0.97 kg/cm²G (50 Torr), the desorption column discharges the gase mixture containing $CH_4$, $CO_2$ and the others into the pressurization column through two pipe lines in the upper and lower portion of the re-adsorption column so that the desorption column at the primary depressurization step is depressurized at an intermediate pressure(i.e. the pressure uniformalization and the primary pressurization step).

The discharge of the gas mixture into the pressurization column is conducted by regulating the flow rates of the upper and lower pipe lines according to the gas component profile in the column upon the completion of the re-adsorption process, after that according to the predetermined steps in order such as the self-depressurization step, the depressurization by suction step and the desorption of $CO_2$ by suction from 9 kg/cm²G of the adsorption pressure to (-)0.97 kg/cm²G (50 Torr) of the $CO_2$ desorption pressure. Through these depressurization, the gas component and moisture adsorbed within the adsorbent is desorbed. This is the outline of the desorption process.

The secondary depressurization stage are divided into self-depressurization and depressurization by suction, the self-depressurization is conducted to discharge the gas from the bottom portion of the desorption column, and the depressurization by suction is done by the vacuum pump.

This gas mixture discharged from the desorption column through the secondary depressurization stage is recovered in the water-sealed gas holder. At the tertiary depressurization stage, a highly purified $CO_2$ gas is taken out from the desorption column. This temperature's graphs are usable as a parameter, that is, it relates to the static pressure resistance of gas flow into the adsorbent bed, the adsorption level of the adosrption and the difficult degree of the adsorption and also has a correlativity for the desorption level, therefore, it can decide the desorbability of adsorbent according to the temperature difference between the early stage and the last stage of the desorption process. From this view, the large amount of temperature descent in Fig.3 shows that the desorbability of the adsorbent is larger in this case.

Through these three depressurizations, it is possible to increase the purity of the $CO_2$ gas and reduce the amount of the recovered gas. Regarding the temperature profiles in the adsorbent bed during the desorption process, as shown in Fig.3, these temperatures show a drastic descent due to the endothermic heat in the desorption at each position according to the progress of the desorption process.

[5] Adsorbent

The adsorbent employed in this invention is a kind of carbon molecular sieve having approximately 3 Å of pore diameter in average, this adsorbent is packed in the four units of the column respectively.

This adsorbent has a high selectivity for $CH_4$ gas and $CO_2$ gas, and can easily desorb the $CO_2$ gas and moisture even in the normal temperature. Therefore, the PSA device packed this adsorbent is able to be operated under the normal temperature.

As understandable from the above explanations, the excessively re-adsorbable PSA device of the present invention is said to be an improved PSA device with TSA effect, wherein the key to obtain a high purity, the high efficiency of recovery of a primary and a secondary component with constantly stabilized gas flow is characterized as follows:

[1] By increasing the temperature of a recovered gas from holder, it accelerates to desorb $CH_4$, $CO_2$ and heavy hydrocarbon adsorbed together in the re-adsorption process and to regenerate the adsorbent;

[2] It can shift the necessary gases components of obtaining a highly purified $CH_4$ component for the adsorption process from both the upper and lower of the column finished the re-adsorption process according to the gas component distribution upon the completion of the re-adsorption process by the operation of the pressure uniformalization while the discharging flow rate is controlled automatically in the upper and lower pipe lines according to the automatic valve control in the central control system;

[3] Through two stages such as the secondary depressurization stage and the tertiary depressurization stage in the desorption process, $CH_4$ component is taken out from the desorbed gas as the recovered gas into holder in the secondary depressurization stage, and the highly purified $CO_2$ component is further taken out in the tertiary deprerssurization stage; and

[4] The pressurization with a constant gas flow rate in the pressurization column, the component uniformalization of the recovered gas and the feeding with a constant gas flow rate are controlled by operation technologies and the water-sealed gas holder in the present invention.

The improvement of the adsorbent is preferable in order to use a higher selectivity type, but it may be usable another class adsorbent without a large decrease of the product high purity and recovery efficiency of product is easily attained even in the case that the ratio of selectivity between $CH_4$ and $CO_2$ is less than 20.(now using a substance of less than 20)

## EXAMPLE I

The practical examples are shown in Table 2 and Table 3. The crude gas mixture consisting of $CH_4$, $CO_2$, $H_2$, heavy hydrocarbon and the others produced by a gas producing device is fed into the improved PSA device of the present invention, wherein the tertiary component gas($CH_4$-rich gas than the recovered gas, and the $CO_2$ gas) is recycled into the crude gas mixture.

It is measured that the gas of the combustible component is 99.66% and show that the breakdown of its concentration is 96.05% of $CH_4$, 3.61% of $H_2$, and the purity of $CO_2$ is 98.97%, and the recovery efficiency of the combustible component($H_2$ & $CH_4$) for the crude gas mixture is 99.7%, and the recovery efficiency of $CO_2$ is 98.8%, thus these figures show extremely high recovery efficiency such as that the both combustible components and $CO_2$ reach 99% in total recovery efficiency.

As an interesting result, in the re-adsorption column which further adsorbs an additional $CO_2$ gas and desorbs $CH_4$, comparing the quantity of $CH_4$ gas fed into the re-adsorption column by the recovered gas from holder with the quantity of $CH_4$ gas at the outlet of the upper portion of the re-adsorption column, it is measured that the latter increases 5% more than the front.

According to the aforementioned improved PSA device of the present invention, this PSA device has the following technical functions and effects:

[1] This improved PSA device can obtain a tertiary component gas($CH_4$-rich gas than the recovered gas, the $CO_2$ gas) through the re-adsorption column, which are recovered from the conventional exhaust gas and fed into the re-adsorption column with regulating its temperature and its concentration;

[2] This improved PSA device can increase not only the purity of the primary component($CH_4$) but also the purity of the secondary component($CO_2$) together with the high recovery efficiencies of both components; and

[3] By the operation in the secondary depressurization stage and the tertiary depressurization stage in the desorption process, it is easy to control the recovered gas and pure $CO_2$ gas and to minimize the recovered gas as less as possible. Then this improved PSA device is expected to become more compact and reduce the running cost.

The invention may be embodied in other specific forms without departing from the spirit or essential characteristics thereof. The present embodiment is therefore to be considered in all respects as illustrative and not restrictive, the scope of the invention being indicated by the appended claims rather than by the foregoing description and all changes which come within the meaning and range of equivalency of the claims are therefore intended to be embraced therein.

TABLE 1

| CYCLE | | | | 1 | | | | | 2 | | | | | 3 | | | | | 4 | | |
|---|---|---|---|---|---|---|---|---|---|---|---|---|---|---|---|---|---|---|---|---|---|
| STEP | 1 | 2 | 3 | 4 | 5 | 6 | 7 | 8 | 9 | 10 | 11 | 12 | 13 | 14 | 15 | 16 | 17 | 18 | 19 | 20 |
| Column A | Adsorption process — Adsorption (extract a refined gas) | | | | | Excessive re-adsorption process — Excessive re-adsorption (re-adsorption) | | | | Displacement | Desorption process — Pressure uniformalization / Self-depressurization / Depressurization by suction — Desorption by suction (extract carbon dioxide gas) | | | | | Pressurization process — Primary pressurization / Secondary pressurization | | | | | Keep intact |
| Column B | Excessive re-adsorption process — Excessive re-adsorption (re-adsorption) | | | | | Displacement | Desorption process — Pressure uniformalization / Self-depressurization / Depressurization by suction — Desorption by suction (extract carbon dioxide gas) | | | | Pressurization process — Primary pressurization / Secondary pressurization | | | | | Keep intact | Adsorption process — Adsorption (extract a refined gas) | | | | |
| Column C | Desorption process — Pressure uniformalization / Self-depressurization / Depressurization by suction — Desorption by suction (extract carbon dioxide gas) | | | | | Pressurization process — Primary pressurization / Secondary pressurization | | | | | Keep intact | Adsorption process — Adsorption (extract a refined gas) | | | | | Excessive re-adsorption process — Excessive re-adsorption (re-adsorption) | | | | Displacement |
| Column D | Pressurization process — Primary pressurization / Secondary pressurization | | | | | Keep intact | Adsorption process — Adsorption (extract a refined gas) | | | | Excessive re-adsorption process — Excessive re-adsorption (re-adsorption) | | | | | Displacement | Desorption process — Pressure uniformalization / Self-depressurization / Pressure uniformalization — Desorption by suction (extract carbon dioxide gas) | | | | |

EP 0 426 937 A1

Operational conditions: 30℃          Recovered gas temperature: 90 ℃

Adsorptional pressure: 9kg/cm²G       Flow rate of a crude gas mixture prior processed: 502 Nm³/hr

Table 2.

| | CRUDE GAS MIXTURE PRIOR PROCESSED | PRIMARY COMPONENT GAS (refined gas as product gas) | SECONDARY COMPONENT GAS ($CO_2$ gas as product gas) | RECOVERED GAS FROM HOLDER | TERTIARY COMPONENT GAS (Output gas from the gas outlet of re-adsorption column) |
|---|---|---|---|---|---|
| Analysis of gas composition and gas flow rate in operation | | | | | |
| $H_2$ | 2.73 | 3.61 | 0.00 | 1.00 | 3.41 |
| $CH_4$ | 72.12 | 96.05 | 1.03 | 23.23 | 80.95 |
| $CO_2$ | 25.15 | 0.34 | 98.97 | 75.77 | 15.64 |
| Composition (Vol%) | | | | | |
| Flow rate ($Nm^3/hr$) | 502 | 376 | 126 | 87 | 26 |

EP 0 426 937 A1

Table 3.

| Measurement for moisture content of gas | | |
| --- | --- | --- |
| | Moisture content [ g/Nm³ ] | Dew point (atmospheric pressure base) [ °C ] |
| CRUDE GAS MIXTURE PRIOR PROCESSED | 3.9 | 4 |
| REFINED GAS AS PRODUCT GAS | 0.034 | -45 |

## Claims

1. A recovery system with an excessively re-adsorbable process on the PSA device, comprising four units of adsorption column in which a crude gas mixture is fed into the adsorption columns, a product gas consisting of mainly a primary component in the adsorption column and another product gas consisting of mainly a secondary component in a desorption column are produced, an adsorbent having a high adsorption selectivity for the secondary component, and serial processes of adsorption, re-adsorption, desorption and pressurization in sequence:

[1] In an adsorption process, the crude gas mixture is fed into the lower portion of the adsorption column, wherein the crude gas mixture is processed to adsorb the secondary component selectively as much as possible by the adsorbent until just before the breakthrough point;

[2] The adsorption column of the above paragraph[1] which has finished the adsorption process is switched to the re-adsorption process, in the desorption process after finishing the re-adsorption process, a desorbed gas is recovered into a reservior especially in the first half of the desorption process, a recovered gas from the reservoir is fed into the lower portion of the column of [1], wherein a tertiary component gas is obtained from the recovered gas from the reservoir by causing a higher partial pressure of the secondary component and selectively adsorbing the secondary component, the tertiary component gas consisting of mainly the primary component;

[3] In the desorption process in the column of [1] which has finished the re-adsorption process and then switched to the desorption process, the column of [1] is depressurized by discharging the inner gases from the upper and lower portions of the column of [1] through two pipe lines into the pressurization column which has finished the desorption process and switched to the pressurization process, and the column is further depressurized through a self-depressurization and depressurization by suction, wherein the recovered gas is restored in the reservoir, and the pure secondary component are taken out by the depressurization by suction at the last stage of the desorption process; and

[4] The column of [1] which has finished the desorption process and then returns to the pressurization process, will receive a pressurized gas from the re-adsorption column through the upper and lower two pipe lines until the pressurization column's pressure reaches the same pressure of the re-adsorption column, and further receives a product gas consisting of mainly the primary component from a surge tank, pressurize the pressurization column until at the feeding pressure of the crude gas mixture; characterized in that:

[a] In the excessively re-adsorbable re-adsorption process, the temperature of the recovered gas from the reservoir is specified to be higher than the temperature of the crude gas mixture, and to be lower than the maximum operating temperature of the adsorbent; and

[b] In the excessively re-adsorbable re-adsorption process, the concentration of the secondary component in the recovered gas from the reservoir is specified to be higher than the concentration of secondary component in the crude gas mixture, and to be lower than the concentration of secondary component of the secondary component gas recovered in the last stage of the desorption process.

2. A system as claimed in claim 1, wherein a crude gas mixture consists of $CH_4$, $CO_2$ and $H_2$; a primary component consists of $CH_4$; a secondary component consists of $CO_2$; and a tertiary component gas is a $CH_4$-rich gas which is richer than the $CH_4$ of the recovered gases, and further is a gas mixture with $CO_2$.

# FIG. IA

EP 0 426 937 A1

# FIG. IB

STEP 3

PRODUCT GAS (REFINED GAS)
9.0 kg/cm$^2$ G (CONSTANT)

SECONDARY PRESSURIZING GAS

LIFT RISING

9.1 kg/cm$^2$ G (CONSTANT)

9.0 kg/cm$^2$ G (CONSTANT)

0.02 kg/cm$^2$ G

4.0 kg/cm$^2$ G

0.02 kg/cm$^2$ G (CONSTANT)

A    B    C    D

500 Torr    3.5 kg/cm$^2$ G

CRUDE GAS MIXTURE

RECOVERED GAS    DRAIN

9.1 kg/cm$^2$ G (CONSTANT)

STEP 4

PRODUCT GAS (REFINED GAS)
9.0 kg/cm$^2$ G (CONSTANT)

SECONDARY PRESSURIZING GAS

LIFT DESCENDING

9.1 kg/cm$^2$ G (CONSTANT)

9.0 kg/cm$^2$ G (CONSTANT)

500 Torr    9.0 kg/cm$^2$ G

0.02 kg/cm$^2$ G (CONSTANT)

A    B    C    D

60 Torr    4.0 kg/cm$^2$ G

CRUDE GAS MIXTURE

RECOVERED GAS    DRAIN

PRODUCT CO$_2$ GAS

9.1 kg/cm$^2$ G (CONSTANT)

EP 0 426 937 A1

# FIG. 1C

PRODUCT GAS (REFINED GAS)
9.0 kg/cm$^2$ G (CONSTANT)

## STEP 5

LIFT STAYS CONSTANTLY

0.02 kg/cm$^2$ G (CONSTANT)

9.1 kg/cm$^2$ G (CONSTANT)

9.0 kg/cm$^2$ G (CONSTANT)

9.0 kg/cm$^2$ G (CONSTANT)

60 Torr ↓ 50 Torr

[A]  [B]  [C]  [D]

CRUDE GAS MIXTURE

DISPLACEMENT GAS

DRAIN

PRODUCT CO$_2$ GAS

9.1 kg/cm$^2$ G (CONSTANT)

COLUMN (A)  ADSORPTION

COLUMN (B)  EXCESSIVE RE-ADSORPTION

COLUMN (C)  PRESSURE UNIFORMALIZTION DESORPTION

COLUMN (D)  PRIMARY PRESSURIZATION AND SECONDARY PRESSURIZATION

# FIG. 1

| FIG. 1A |
| FIG. 1B |
| FIG. 1C |

# FIG. 2

GAS OUTLET

HEIGHT OF ADSORBENT PACKED. 4,835

475

① MOST UPPER PORTION TEMP.

300

② MIDDLE UPPER PORTION TEMP.

300

③ UPPER PORTION TEMP.

1,530

④ CENTRAL PORTION TEMP.

1,530

⑤ LOWER PORTION TEMP.

300

⑥ MIDDLE LOWER PORTION TEMP.

300

⑦ MOST LOWER PORTION TEMP.

100

GAS INLET

# FIG. 3

# FIG. 4

# FIG. 5

ADSORBED QUANTITY IN
ADSORPTION PROCESS

$CH_4$: qA1 ($\leftarrow$PA1)
$CO_2$: qB1 ($\leftarrow$PB1)

ADSORBED QUANTITY IN
EXCESSIVE RE-ADSORPTION

$CH_4$: qA2 ($\leftarrow$PA2)
$CO_2$: qB2 ($\leftarrow$PB2)

# FIG. 6

# FIG. 7

# FIG. 8

# FIG. 9

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| X | EP-A-0 314 040 (SAIBU GAS) * Complete document * | 1,2 | B 01 D 53/04 |
| A | EP-A-0 193 716 (AIR PRODUCTS) * Complete document * | 1,2 | |
| A | EP-A-0 305 919 (AIR PRODUCTS) * Complete document * | 1,2 | |

TECHNICAL FIELDS SEARCHED (Int. Cl.5)

B 01 D

The present search report has been drawn up for all claims

| Place of search | Date of completion of the search | Examiner |
|---|---|---|
| THE HAGUE | 23-01-1991 | BOGAERTS M.L.M. |